# FASCICULE DE BREVET EUROPEEN

(11) **EP 2 585 268 B1**
(45) Date de publication et mention de la délivrance du brevet: **11.06.2014**
(21) Numéro de dépôt: 11737990.9
(22) Date de dépôt: 20.06.2011
(51) Int. Cl.: B29C 45/00, B29C 37/00

(54) **PROCEDE ET MOULE POUR LA FABRICATION D'UN RESERVOIR A FUT DE COULISSEMENT ET PISTON SUIVEUR**
VERFAHREN UND FORMWERKZEUG ZUR HERSTELLUNG EINES BEHÄLTERS MIT EINER GLEITTROMMEL UND FOLGETROMMEL
METHOD AND MOLD FOR MANUFACTURING A CONTAINER HAVING A SLIDE DRUM AND FOLLOWER PISTON

(30) Priorité: 23.06.2010 FR 1054978
(43) Date de publication de la demande: 01.05.2013
(73) Titulaire: Aptar France SAS, 27110 Le Neubourg (FR)
(72) Inventeur: DECOTTIGNIES, Laurent, F-95800 Cergy (FR); GOUDIGAN, Ludovic, F-27330 Epinay (FR)
(74) Mandataire: CAPRI
(86) Numéro de dépôt international: PCT/FR2011/051404
(87) Numéro de publication internationale: WO 2011/161363

(56) Documents cités:
- EP-A1- 1 876 484
- FR-A1- 2 718 417
- JP-A- 55 005 807
- US-A- 4 771 925
- US-A1- 2007 020 421
- FOREMAN D: "PRECISION MOULDING", PROFESSIONAL ENGINEERING, DESIGN COUNCIL, GB, 1 février 1976 (1976-02-01), pages 1-07, XP001176360,

## Description

La présente invention concerne un procédé et un moule pour la fabrication d'un réservoir de produit fluide destiné à être associé à un organe de distribution, tel qu'une pompe, pour constituer un distributeur de produit fluide. La pompe est en général une pompe manuelle sur laquelle l'utilisateur peut appuyer pour distribuer une dose de produit fluide issue du réservoir. Ce genre de distributeur est fréquemment utilisé dans les domaines de la cosmétique, de la parfumerie ou encore de la pharmacie.

La présente invention s'intéresse à un type de réservoir particulier, à savoir un réservoir comprenant une surface interne cylindrique circulaire définissant un fût de coulissement pour un piston suiveur qui coulisse de manière étanche à l'intérieur du fût. Le réservoir comprend également une surface externe de forme quelconque séparée de la surface interne cylindrique circulaire par une épaisseur de paroi variable. Autrement dit, la surface extérieure n'a pas la même forme que la surface intérieure cylindrique circulaire. De ce fait, l'épaisseur de paroi du réservoir varie d'un endroit à un autre, et plus particulièrement dans la direction radiale à partir de l'axe de symétrie du réservoir, s'il y en a un.

Pour fabriquer ce type de réservoir de produit fluide à fût de coulissement cylindrique circulaire, on utilise un moule spécifique destiné à l'injection de matière plastique en fusion. Pour réaliser le fût de coulissement, le fond du réservoir est ouvert de manière à pouvoir engager une broche de moulage qui va définir la surface interne cylindrique circulaire du fût de coulissement. Après moulage, et généralement avant refroidissement de la matière plastique, la broche de moulage est retirée, laissant la surface interne exposée à l'air libre. Le réservoir va ainsi se refroidir, subissant ainsi de manière inévitable des phénomènes de retrait de matière, bien connu dans le domaine du moulage de matière plastique. Au final, après refroidissement complet, la surface interne du réservoir n'est plus parfaitement circulaire, ce qui génère des fuites de produit fluide lors du coulissement de piston suiveur, qui lui est parfaitement circulaire. Ainsi, l'utilisation d'une broche de moulage classique ne permet pas d'obtenir une surface interne adaptée à servir de fût de coulissement pour un piston suiveur.

Dans l'art antérieur, on connait le document FR-2 718 417 qui décrit un piston suiveur présentant un pourtour extérieur de contact de forme oblongue ayant deux parties de plus forte courbure définies par une paire d'arcs de cercle de même rayon de courbure, lesdits arcs de cercle étant disposés l'un par rapport à l'autre selon une première symétrie spéculaire et raccordés l'un à l'autre par des segments de raccordement définis par une paire d'arcs de cercle de même rayon de courbure disposés l'un par rapport à l'autre selon une seconde symétrie spéculaire perpendiculaire à la première symétrie spéculaire. Ce piston de forme générale ovale est censé résoudre le phénomène de retrait de matière après refroidissement. Ce piston ovale offre une solution acceptable dans certains cas, mais il nécessite une très grande précision, et de ce fait engendre un coût de fabrication très élevé. De plus, il se limite à un piston de forme ovale.

Le document US 4771925 - A divulgue un procédé de fabrication d'un réservoir de produit fluide, le réservoir comprenant une surface interne cylindrique circulaire définissant un fût de coulissement dans lequel coulisse un piston suiveur de manière étanche et une surface externe de forme quelconque séparée de la surface interne, le procédé comprenant l'étape de mouler le réservoir dans un moule avec une matière plastique en fusion.

La présente invention a pour but de remédier aux inconvénients précités de l'art antérieur en définissant un procédé de fabrication permettant de réaliser une surface interne cylindrique circulaire apte à servir de fût de coulissement pour un piston suiveur classique cylindrique circulaire , alors que la surface externe visible du réservoir présente une forme quelconque, de préférence cylindrique.

Pour ce faire, le procédé de la présente invention comme défini dans la revendication 1, prévoit de former la surface interne cylindrique circulaire du réservoir avec une broche de moulage cylindrique, mais non circulaire, ayant une forme appropriée der manière à tenir compte des phénomènes de retrait de matière de sorte à obtenir une surface interne cylindrique circulaire après refroidissement de la matière plastique. Avantageusement, la broche de moulage définit, en section transversale, des dimensions transversales qui sont d'autant plus petites que l'épaisseur de paroi du réservoir est grande. En d'autres termes,
la dimension transversale de la broche de moulage est inversement proportionnelle à l'épaisseur de paroi du réservoir. Ceci s'explique par le fait que le phénomène de retrait de matière est d'autant plus important que l'épaisseur de matière est importante. Par modélisation ou par essai empirique, il est possible de définir avec précision la forme non circulaire de la broche de moulage nécessaire pour réaliser une surface interne parfaitement cylindrique et circulaire pour une surface externe de forme donnée. Pour permettre à la matière plastique de subir sans contrainte les phénomènes de retrait de matière, la broche de moulage est retirée avant refroidissement de la matière plastique.

L'invention définit également un moule comme défini dans la revendication 4, pour la fabrication d'un procédé de fabrication d'un réservoir de produit fluide destiné à être associé à un organe de distribution, tel qu'une pompe, pour constituer un distributeur de produit fluide, le réservoir comprenant une surface interne définissant un fût de coulissement cylindrique circulaire dans lequel coulisse un piston suiveur de manière étanche, le réservoir comprenant une surface externe séparée de la surface interne par une épaisseur de paroi variable, caractérisé en ce que le moule comprend une broche de moulage cylindrique non circulaire pour former la surface interne de manière à tenir compte des phénomènes de retrait de matière après refroidissement de sorte à obtenir une surface interne cylindrique circulaire. Avantageusement, la broche de moulage définit, en section transversale, des dimensions transversales qui sont d'autant plus petites que l'épaisseur de paroi du réservoir est grande. Des formes préférentielles de l'invention sont définies dans les revendications dépendantes.

L'invention repose sur le principe selon lequel la forme, en section transversale, de la broche de moulage cylindrique doit être adaptée en fonction de l'épaisseur de paroi locale du réservoir de manière à réaliser une surface interne cylindrique non circulaire, qui après retrait de matière, se transforme en surface interne cylindrique circulaire.

L'invention sera maintenant plus amplement décrite en référence aux dessins joints donnant à titre d'exemples non limitatifs deux modes de réalisation de l'invention.

Sur les figures :
La figure 1 est une vue en coupe transversale verticale à travers un distributeur de produit fluide comprenant un réservoir de produit fluide selon l'invention,
La figure 2a est une vue en section transversale horizontale à travers le réservoir de produit fluide de la figure 1 après refroidissement du réservoir,
La figure 2b est une vue similaire à la figure 2a au cours de l'opération de moulage, et
Les figures 3a et 3b sont des vues correspondant respectivement aux figures 2a et 2b pour un deuxième mode de réalisation d'un réservoir selon l'invention.

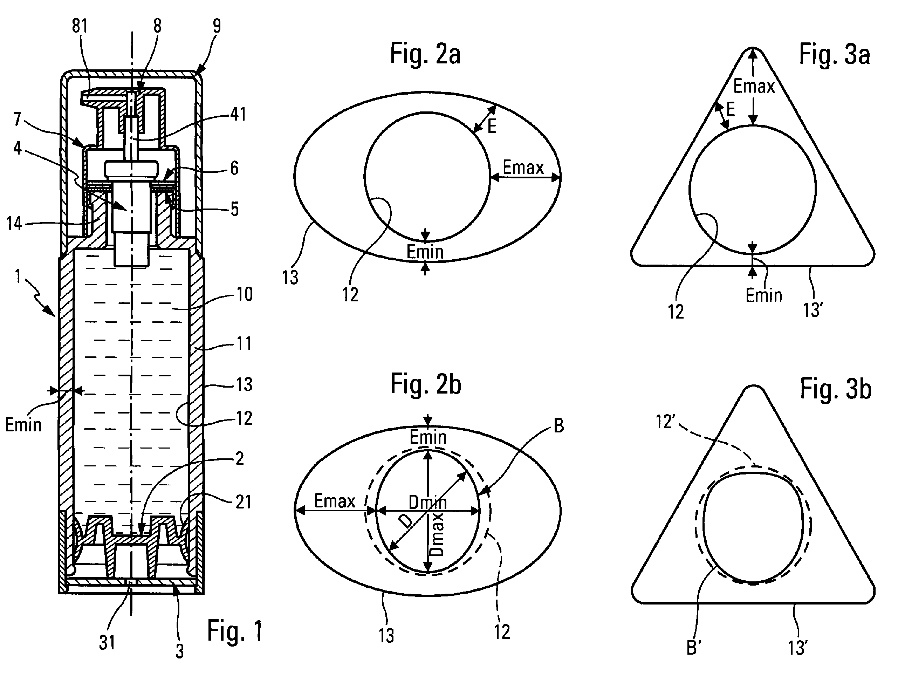

Le distributeur de produit fluide représenté sur la figure 1 est un distributeur de conception conventionnelle, excepté son réservoir de produit fluide 1 qui est réalisé selon l'invention. Ce réservoir de produit fluide 1 comprend un corps de réservoir 11 dont l'extrémité inférieure est ouverte et l'extrémité supérieure forme un col 14 de section rétrécie. Le corps 11 définit une surface interne 12 et une surface externe 13. Entre ces deux surfaces 12, 13, le corps 11 du réservoir présente une épaisseur de paroi qui est constituée de matière plastique. Sur la figure 1, cette épaisseur de paroi est l'épaisseur de paroi minime, comme on le verra ci-après. La surface interne 12 est cylindrique et circulaire de manière à définir un fût de coulissement étanche pour un piston suiveur 2, qui lors du fonctionnement du distributeur, va se déplacer de manière étanche à l'intérieur du fût de coulissement. Le piston suiveur 2 comprend une lèvre d'étanchéité 21 destinée à coulisser de manière étanche à l'intérieur du fût de coulissement. En d'autres termes, le piston suiveur 2 définit un fond mobile pour le réservoir 1. Son déplacement à l'intérieur du fût de coulissement est engendré par les dépressions successives qui règnent à l'intérieur du réservoir, comme on le verra ci-après. Pour des raisons esthétiques et de sécurité, le réservoir 1 peut être pourvu d'un fond fixe rapporté 3 qui présente un trou d'éventation 31, nécessaire au bon coulissement du piston suiveur 2. Pour des raisons de simplicité de fabrication, d'efficacité et de coût, le piston suiveur 2 présente au niveau de sa lèvre d'étanchéité 21 une forme cylindrique circulaire. Cela est également le cas pour la surface interne 12, ce qui permet un coulissement parfaitement étanche du piston suiveur 2 à l'intérieur du fût de coulissement. Jusqu'à présent, malgré de nombreuses tentatives infructueuses, il n'a pas été possible de réaliser le piston suiveur et le fût de coulissement avec une forme autre que circulaire.

Dans l'art antérieur, on a toujours cherché à réaliser les réservoirs de produit fluide avec une épaisseur de paroi constante de manière à se départir des phénomènes de retrait de matière. C'est pourquoi la plupart des réservoirs de produit fluide du commerce présente une surface externe ayant une section transversale circulaire. La présente invention se démarque de ces réservoirs classiques de l'art antérieur en ce que l'épaisseur de paroi du réservoir n'est pas constante entre la surface intérieure cylindrique circulaire et la surface externe 13 de forme cylindrique quelconque en section transversale. Nous verrons ci-après de quelle manière l'invention résout le phénomène de retrait de matière.

Le distributeur de produit fluide de la figure 1 comprend également un organe de distribution 4, qui est ici une pompe, définissant une entrée de produit fluide communiquant avec le réservoir et une tige d'actionnement 41 qui est déplaçable axialement en va-et-vient pour distribuer des doses de produit fluide. L'organe de distribution 4 est monté de manière fixe et étanche sur le col 14 du réservoir par une bague de fixation 6 et un joint de col 5. Pour des raisons purement esthétiques, la bague de fixation 6 est entourée par une frette d'habillage 7, qui est de préférence réalisée en métal. La tige d'actionnement 41 est coiffée d'un poussoir 8 définissant un orifice de distribution 81. Par appui sur le poussoir 8, la tige d'actionnement 41 est entraînée vers le bas, générant ainsi la distribution de produit fluide. Optionnellement, la partie haute du distributeur peut être protégée par un capot 9 que l'utilisateur doit préalablement retirer pour actionner le poussoir 8. Il s'agit là d'une configuration tout à fait classique pour un distributeur de produit fluide dans les domaines de la cosmétique, de la parfumerie ou encore de la pharmacie. Les réservoirs à piston suiveur sont tout de même plus appropriés à la distribution de produits fluides pâteux, tels que des crèmes, des pommades, etc.

La figure 2a montre la section transversale du réservoir 1 au niveau de son corps 11. On peut remarquer que la surface interne 12 est parfaitement cylindrique et circulaire, alors que la surface externe 13 présente une forme oblongue ou ovale. Ainsi, l'épaisseur de paroi E du réservoir varie entre une épaisseur minimum Emin et une épaisseur maximum Emax. Pour obtenir une telle configuration avec une surface interne 12 parfaitement cylindrique et circulaire, la présente invention prévoit de forme la surface interne 12 avec une broche de moulage B qui est cylindrique, mais non circulaire, et dont les dimensions, en section transversale, sont adaptées pour tenir compte des phénomènes de retrait de matière après refroidissement, de sorte à obtenir une surface interne 12 parfaitement cylindrique et circulaire après refroidissement. On peut notamment voir sur la figure 2b que la broche de moulage B présente une dimension maximale Dmax et une dimension minimale Dmin, respectivement aux endroits où l'épaisseur de paroi E du réservoir présente l'épaisseur de paroi Emin et Emax. En d'autres termes, les dimensions transversales de la broche de moulage B dont d'autant plus petites que l'épaisseur de paroi du réservoir est grande. On peut également dire que la dimension transversale de la broche de moulage B est inversement proportionnelle à l'épaisseur de paroi du réservoir. Sur la figure 2b, la surface interne cylindrique circulaire 12 après refroidissement a été représentée en traits pointillés.

Les figures 3a et 3b montrent une autre forme de réalisation pour un réservoir de produit fluide selon l'invention, avec une surface externe 13' de forme sensiblement triangulaire en section transversale. A nouveau, pour obtenir une surface interne 12 cylindrique circulaire, on utilise une broche de moulage B' de forme cylindrique mais non circulaire, comme on peut le voir sur la figure 3b. La dimension de la broche B' en section transversale est minimale au niveau des coins du triangle, étant donné que l'épaisseur de paroi du réservoir y est maximale.

La présente invention s'applique à n'importe quelle forme de surface externe cylindrique, mais non circulaire, en concevant une broche de moulage spécifique dont la section circulaire est adaptée au phénomène de retrait et à la forme de la section de la surface externe.

La broche de moulage fait partie d'un moule complet permettant en outre de former la surface externe 13 du réservoir ainsi que le col 14.

## Revendications

1. Procédé de fabrication d'un réservoir de produit fluide (1) destiné à être associé à un organe de distribution (4), tel qu'une pompe, pour constituer un distributeur de produit fluide, le réservoir (1) comprenant une surface interne cylindrique circulaire (12) définissant un fût de coulissement dans lequel coulisse un piston suiveur (2) de manière étanche, le réservoir (1) comprenant une surface externe (13 ; 13') de forme quelconque séparée de la surface interne par une épaisseur de paroi variable (E, Emax, Emin), le procédé comprenant une étape de moulage du réservoir (1) dans un moule avec une matière plastique en fusion, **caractérisé en ce que** la surface interne (12) est formée par une broche de moulage cylindrique non circulaire (B ; B') de forme appropriée de manière à tenir compte des phénomènes de retrait de matière après refroidissement de sorte à obtenir une surface interne (12) cylindrique circulaire.

2. Procédé de fabrication selon la revendication 1, dans lequel la broche de moulage (B ; B') définit, en section transversale, des dimensions transversales (D, Dmax, Dmin) qui sont d'autant plus petites que l'épaisseur de paroi (E) du réservoir est grande.

3. Procédé de fabrication selon la revendication 2, dans lequel la broche de moulage (B ; B') est retirée avant refroidissement.

4. Moule pour la mise en oeuvre d'un procédé de fabrication d'un réservoir de produit fluide (1) destiné à être associé à un organe de distribution (4), tel qu'une pompe, pour constituer un distributeur de produit fluide, le réservoir (1) comprenant une surface interne (12) définissant un fût de coulissement cylindrique circulaire dans lequel coulisse un piston suiveur (2) de manière étanche, le réservoir (1) comprenant une surface externe (13 ; 13') séparée de la surface interne par une épaisseur de paroi variable (E, Emax, Emin), **caractérisé en ce que** le moule comprend une broche de moulage cylindrique non circulaire (B ; B') pour former la surface interne (12) de manière à tenir compte des phénomènes de retrait de matière après refroidissement de sorte à obtenir une surface interne (12) cylindrique circulaire.

5. Moule selon la revendication 4, dans lequel la broche de moulage (B ; B') définit, en section transversale, des dimensions transversales (D, Dmax, Dmin) qui sont d'autant plus petites que l'épaisseur de paroi (E, Emax, Emin) du réservoir est grande.

## Patentansprüche

1. Herstellungsverfahren für einen Behälter (1) für ein fluides Produkt zur Verbindung mit einer Ausgabeeinrichtung (4), wie einer Pumpe, um einen Spender für ein fluides Produkt zu schaffen, wobei der Behälter (1) eine zylindrische, kreisförmige Innenfläche (12) aufweist, die einen Gleitzylinder definiert, in dem ein Nachlaufkolben (2) in dichtender Weise gleitet, wobei der Behälter (1) eine Außenfläche (13; 13') von irgendeiner Form aufweist, die durch eine variable Wandstärke (E, Emax, Emin) von der Innenfläche getrennt ist, wobei das Verfahren einen Schritt des Formens des Behälters (1) in einer Form mit einem schmelzflüssigen Kunststoffmaterial umfasst, **dadurch gekennzeichnet, dass** die Innenfläche (12) durch einen zylindrischen, nicht kreisförmigen Formdorn (B; B') von einer Form gebildet ist, die dafür geeignet ist, einer Materialschwunderscheinung nach dem Abkühlen Rechnung zu tragen, so dass eine zylindrische, kreisförmige Innenfläche (12) erhalten wird.

2. Herstellungsverfahren nach Anspruch 1, wobei der Formdorn (B; B') im Querschnitt Querabmessungen (D, Dmax, Dmin) definiert, die in dem Maße zunehmend kleiner werden, wie die Wandstärke (E) des Behälters zunimmt.

3. Herstellungsverfahren nach Anspruch 2, wobei der Formdorn (B; B') vor dem Abkühlen herausgezogen wird.

4. Form für die Umsetzung eines Herstellungsverfahrens für einen Behälter (1) für ein fluides Produkt zur Verbindung mit einer Ausgabeeinrichtung (4), wie einer Pumpe, um einen Spender für ein fluides Produkt zu schaffen, wobei der Behälter (1) eine Innenfläche (12) aufweist, die einen zylindrischen, kreisförmigen Gleitzylinder definiert, in dem ein Nachlaufkolben (2) in dichtender Weise gleitet, wobei der Behälter (1) eine Außenfläche (13; 13') aufweist, die durch eine variable Wandstärke (E, Emax, Emin) von der Innenfläche getrennt ist, **dadurch gekennzeichnet, dass** die Form einen zylindrischen, nicht kreisförmigen Formdorn (B, B') aufweist, um die Innenfläche (12) so zu bilden, dass Materialschwunderscheinungen nach dem Abkühlen berücksichtigt werden, so dass eine zylindrische, kreisförmige Innenfläche (12) erhalten wird.

5. Form nach Anspruch 4, wobei der Formdorn (B; B') im Querschnitt Querabmessungen (D, Dmax, Dmin) definiert, die in dem Maße zunehmend kleiner werden, wie die Wandstärke (E, Emax, Emin) des Behälters zunimmt.

## Claims

1. A method of manufacturing a fluid reservoir (1) for associating with a dispenser member (4), such as a pump, so as to constitute a fluid dispenser, the reservoir (1) including an inside surface (12) that is circularly cylindrical and that defines a slide cylinder in which a follower piston (2) slides in leaktight manner, the reservoir (1) including an outside surface (13, 13') of any shape that is spaced apart from the inside surface by a wall thickness (E, Emax, Emin) that varies, the method comprising molding step of the reservoir (1) in a mold with a melt of plastics material, the method being **characterized in that** the inside surface (12) is formed by a non-circularly-cylindrical molding pin (B; B') having a shape that is suitable for taking account of phenomena of material shrinkage after cooling, so as to obtain an inside surface (12) that is circularly cylindrical.

2. A manufacturing method according to claim 1, wherein in cross-section, the molding pin (B; B') defines transverse dimensions (D, Dmax, Dmin) that decrease with increasing wall thickness (E) of the reservoir.

3. A manufacturing method according to claim 2, wherein the molding pin (B; B') is removed before cooling.

4. A mold for implementing a method of manufacturing a fluid reservoir (1) for associating with a dispenser member (4), such as a pump, so as to constitute a fluid dispenser, the reservoir (1) including an inside surface (12) that defines a circularly-cylindrical slide cylinder in which a follower piston (2) slides in leaktight manner, the reservoir (1) including an outside surface (13, 13') that is spaced apart from the inside surface by a wall thickness (E, Emax, Emin) that varies, the mold being **characterized in that** it includes a non-circularly-cylindrical molding pin (B; B') for forming the inside surface (12), so as to take account of phenomena of material shrinkage after cooling, so as to obtain an inside surface (12) that is circularly cylindrical.

5. A mold according to claim 4, wherein in cross-section, the molding pin (B; B') defines transverse dimensions (D, Dmax, Dmin) that decrease with increasing wall thickness (E, Emax, Emin) of the reservoir.
